(19)

**Europäisches Patentamt**

**European Patent Office**

**Office européen des brevets**

(11) **EP 2 937 689 A1**

(12) **EUROPEAN PATENT APPLICATION**

(43) Date of publication:
**28.10.2015 Bulletin 2015/44**

(51) Int Cl.:
**G01N 29/44** *(2006.01)*

(21) Application number: **15162868.2**

(22) Date of filing: **08.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.04.2014 US 201414261125**

(71) Applicant: **Honeywell International Inc.**
**Morristown, NJ 07962-2245 (US)**

(72) Inventors:
• **Sandera, Cenek**
**Morristown, NJ 07962-2245 (US)**
• **Hedl, Radek**
**Morristown, NJ 07962-2245 (US)**

(74) Representative: **Houghton, Mark Phillip**
**Patent Outsourcing Limited**
**1 King Street**
**Bakewell, Derbyshire DE45 1DZ (GB)**

(54) **ADAPTIVE BASELINE DAMAGE DETECTION SYSTEM AND METHOD**

(57)    A system and method for detecting damage growth in a structure includes sensing, with a sensor that is coupled to the structure, a physical quantity reflecting damage growth, to thereby generate and supply a sensor signal. Features are extracted from the sensor signal to thereby generate a current feature vector. The current feature vector is assigned to either a previously created cluster or to a new cluster. A stability measure is calculated based on clusters to which the current feature vector and a predetermined number of previous feature vectors are assigned. An alarm is selectively generated based on the calculated stability measure.

FIG. 1

EP 2 937 689 A1

**Description**

TECHNICAL FIELD

The present invention generally relates to structural health monitoring, and more particularly relates to a system and method for adaptively detecting damage growth in a structure.

BACKGROUND

It is not uncommon for structures to gradually form small structural defects after long term usage. These relatively small structural defects can grow to undesirable sizes if left undiscovered. Therefore, the structures may undergo regular inspection to not only detect the presence of structural defects, but the sizes and growth of any structural defects that may be present. These inspections may be conducted using simple visual inspections or by various non-destructive testing (NDT) techniques. Many NDT techniques rely on relatively sophisticated, and often expensive, equipment. Moreover, both visual inspections and NDT techniques rely on skilled operators to adequately perform the inspection and interpret results. Thus, these common inspection techniques can be relatively time consuming, expensive, and impacted by various human factors.

To address the issues associated with visual and NDT techniques, structural health monitoring (SHM) systems have been developed. These systems are configured to monitor a structure using sensors that are permanently attached on or near the area of interest, and an automated processing system that provides an evaluation of results. One of the most promising SHM systems that have been developed uses small, low-weight, and low-cost lead-zirconate-titanate (PZT) transducers to generate and sense ultrasonic guided waves (UGW) in both metallic and composite structures. Indeed, the use of UGWs has been shown to be an efficient technique for detecting various types of structural defects including fatigue cracks, corrosion, de-bonding, delamination, composite fiber or matrix cracking, etc.

Numerous signal processing techniques have been developed to derive information from UGW signals in order to detect the presence and growth of structural defects. Many presently known techniques are based on a comparison of two UGW signals measured under different conditions. The first signal is a so-called baseline signal, and the second signal is a measurement signal. The baseline signal is measured on a defect-free structure, and is stored for usage in the monitoring process during the structure operation. The measurement signal is a signal that is measured at various times during operation of the structure, and is thus affected by actual structure status. These two signals are compared using an appropriate metric, which provides information needed to determine the presence/absence of a defect.

The baseline signal is measured either upon sensor installation or it is derived using statistical processing from a number of measurements on several specimens representing the structure. Regardless, both of these approaches suffer from sources of random variance in the baseline signal. One source of variance comes from differences between individual instances of the structure and installed sensors. Another source is related to random variances in time caused by stochastic processes in the measurement system itself and by various environmental factors, e.g., temperature, pressure and external forces changing material properties, which can vary the UGW signal when no defect is present. Unfortunately, these variations in the baseline signal can increase the rate of false positives, which can adversely impact SHM system performance. Moreover, presently known techniques that are employed to reduce false positive rates to an acceptable level may also undesirably reduce SHM system sensitivity.

Hence, there is a need for a system and method of detecting structural defects that has a relatively low false positive detection rate and/or is suitably sensitive. The present invention addresses at least these needs.

BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a method of detecting damage growth in a structure includes sensing, with a sensor that is coupled to the structure, a physical quantity reflecting damage growth, to thereby generate and supply a sensor signal. Features are extracted from the sensor signal to thereby generate a current feature vector. The current feature vector is assigned to either a previously created cluster or to a new cluster. A stability measure is calculated based on clusters to which the current feature vector and a predetermined number of previous feature vectors are assigned. An alarm is selectively generated based on the calculated stability measure.

In another embodiment, a structural health monitoring system for detecting damage growth in a structure includes a transducer and a processor. The transducer is configured to transmit ultrasonic waves into the structure, and to sense the transmitted ultrasonic waves to thereby generate and supply a sensor signal. The processor is in operable communication with the transducer and is coupled to receive the sensor signal therefrom. The processor is configured, upon receipt of the sensor signal to extract a plurality of features from the sensor signal to thereby generate a current feature vector, to assign the current feature vector to either a previously created cluster or to a new cluster, to calculate a stability measure based on clusters to which the current feature vector and a predetermined number of previous feature vectors are assigned, and to selectively generate an alarm signal based on the calculated stability measure.

In yet another embodiment, a structural health monitoring system for detecting damage growth in a structure includes a plurality of transducers and a processor. The transducers are configured to transmit ultrasonic waves into the structure, and to sense the transmitted ultrasonic waves to thereby generate and supply sensor signals. The processor is in operable communication with the transducers and is coupled to receive the sensor signals therefrom. The processor is configured, upon receipt of the sensor signals to extract a plurality of features from each sensor signal to thereby generate a current feature vector for each sensor signal, to assign each of the current feature vectors to either a previously created cluster or to a new cluster, to calculate a stability measure based on clusters to which the current feature vectors and a predetermined number of previous feature vectors are assigned, and to selectively generate an alarm signal based on the calculated stability measure.

Furthermore, other desirable features and characteristics of the structural defect detection system and method will become apparent from the subsequent detailed description and the appended claims, taken in conjunction with the accompanying drawings and the preceding background.

BRIEF DESCRIPTION OF THE DRAWINGS

The present invention will hereinafter be described in conjunction with the following drawing figures, wherein like numerals denote like elements, and wherein:

> FIG. 1 depicts a functional block diagram of one embodiment of a structural defect detection and evaluation system;

> FIG. 2 depicts a process, in flow chart form, of a process implemented in the system of FIG. 1 to detect whether one or more structural defects are present in a structure, and whether structural defects may be growing;

> FIG. 3 depicts various vectors generated and used during the process depicted in FIG. 2; and

> FIG. 4 depicts a simplified representation of how a stability measure (T) is calculated.

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

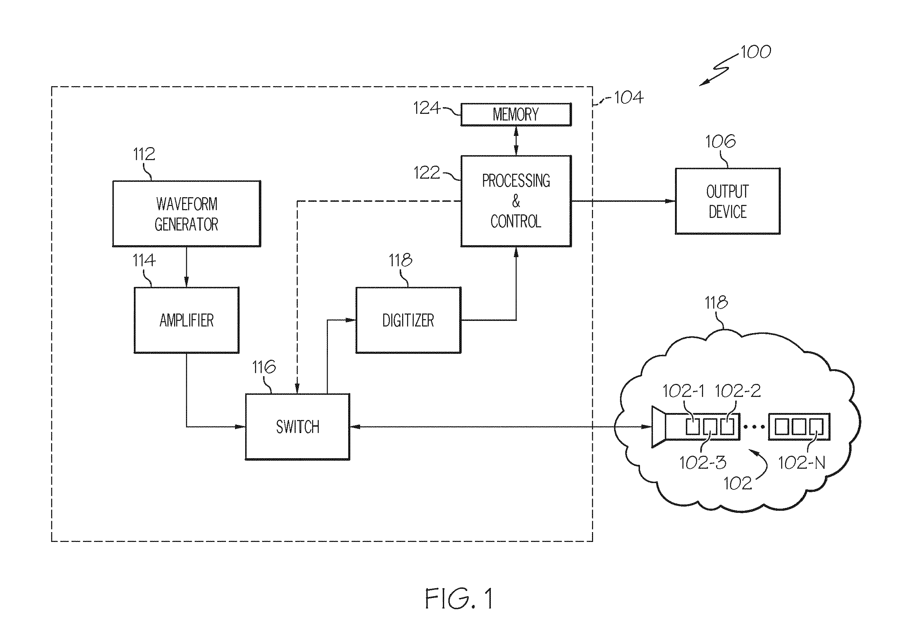

Referring first to FIG. 1, a functional block diagram of one embodiment of a structural defect detection and evaluation system is depicted. The depicted system 100 includes a plurality of transducers 102 (102-1, 102-2, 102-3 ..., 102-N), a processor 104, and an output device 106. The transducers 102 are adapted to be coupled to a structure 108, and are each configured to selectively transmit ultrasonic waves into the structure 108. The transducers 102 are each additionally configured to selectively sense the ultrasonic waves transmitted from one or more of the transducers 102 and generate sensor data representative thereof. In the depicted embodiment, the transducers 102 are configured to transmit and sense ultrasonic guided waves (UGW), but other types of waves may be used. It will be appreciated that in other embodiments, separate transmitting and sensing transducers may be used. It will additionally be appreciated that various types of transducers 102 may be used, but in the depicted embodiment lead-zirconate-titanate (PZT) transducers are used.

The processor 104 is coupled to receive the sensor signals from the transducers 102 and is configured, upon receipt thereof, to detect whether one or more structural defects are present in the structure 108, and to detect the growth of structural defects that are present. The processor 104 is additionally configured to selectively excite, preferably one at a time, each of the transducers 102. For example, in the embodiment depicted in FIG. 1, the processor 104 will excite, one at a time, each of the transducers 102, and receive the sensor data that each of transducers generates in response to the ultrasonic waves that each of the transducers 102 individually transmitted into the structure 108.

The processor 104 may be variously configured and implemented to carry out each of the functions described above, and the additional functions that will be described below. In the depicted embodiment the processor 104 is configured to implement a waveform generator 112, an amplifier 114, a switch 116, a digitizer (or an analog-to-digital (A/D) converter) 118, and a processing and control function 122. It may thus be appreciated that one or more of the waveform generator 112, amplifier 114, switch 116, A/D converter 118, and the processing and control function 122 may be implemented using separate signal processing circuits and/or devices. Alternatively, one or more of these functions may be implemented as part of a single processing device, such as a general purpose processor or microprocessor.

Regardless of how each of the above-mentioned functions is implemented, the waveform generator 112 is configured to generate an excitation signal, which is supplied to the amplifier 114 for suitable amplification and filtration. The amplified and filtered excitation signal is supplied to the switch 116, which is also coupled to the processing and control function 122 and to each of the transducers 102. The switch 116, under control of the processing and control function 122, selectively supplies the amplified and filtered excitation signal, one at a time, to each of the transducers 102. The switch 116 additionally receives the sensor signals from each of the transducers 102, and supplies the sensor signals to the A/D converter 118. The A/D converter 118 converts the sensor signals to digital sensor data, which is supplied to the processing and control function 122.

The processing and control function 122, in addition to controlling the switch 116, processes the sensor data to detect whether one or more structural defects are present in the structure 108, and whether the structural defects may be growing. The processing and control function 122 is additionally configured to at least selectively supply an alert signal to the output device 106, which may be implemented as an aural device, a visual device, or a combination of both.

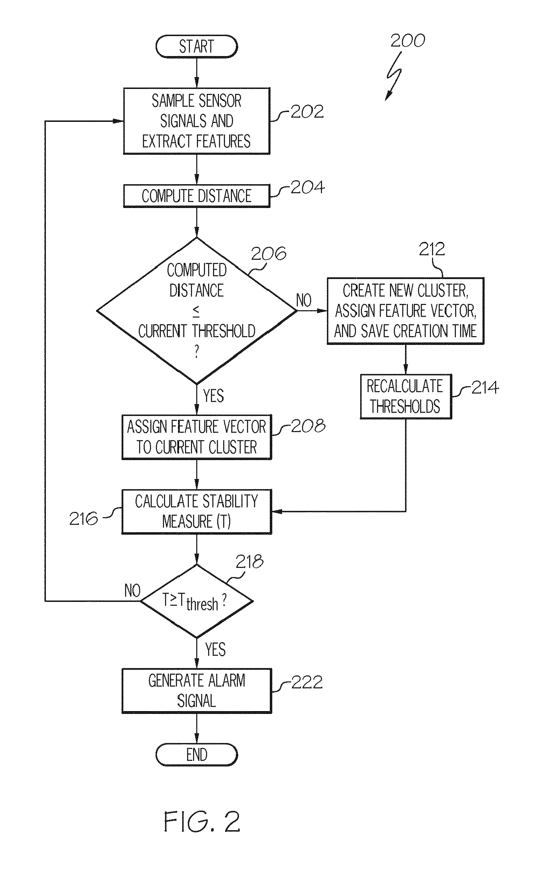

To detect whether one or more structural defects are present in the structure 108 and determine if the structural defects are growing, the processing and control function 122 is configured to implement a process. This process 200, which is depicted in flowchart form in FIG. 2, will now be described. In so doing, it should be noted that the parenthetical references in the following description refer to like reference numerals in FIG. 2.

The process 200 begins by sampling each of the analog sensor signals (preferably one signal at a time) from each of the transducers 102, and extracting a plurality of features from each sensor signal, to thereby generate a current feature vector for each sensor signal (202). It will be appreciated that the processing and control function 122 may extract the features using any one of numerous known feature extraction algorithms.

Each of the current feature vectors are then assigned to either a previously created cluster or to a new cluster. To do so, at least in the depicted embodiment, the following operations (204-216) are repeated separately for each cluster. Before describing these operations, it should be noted that the term "assignment" as used herein does not necessarily mean feature vector assignments are stored in memory. Although the assignments could, in some embodiments, be stored in memory, in most embodiments they are not, as this could be a relatively memory intensive operation.

To make the assignments, the current feature vectors is compared with previously created clusters, and a distance between each cluster and the current feature vector is computed (204). Based on this computation, the closest previously created cluster is selected or a new cluster is created. In particular, if the computed distance between the closest previously created cluster and the current feature vector is smaller than a current threshold (206), then the signal is assigned to that cluster (208). Conversely, if the computed distance between the closest previously created cluster and the current feature vector is greater than the current threshold (206), a new cluster is created and the current feature vector is assigned to that cluster (212). It is noted that the distance between previously created clusters and the current feature vector is individually computed for each particular feature that is extracted. Moreover, each feature also has its own associated threshold.

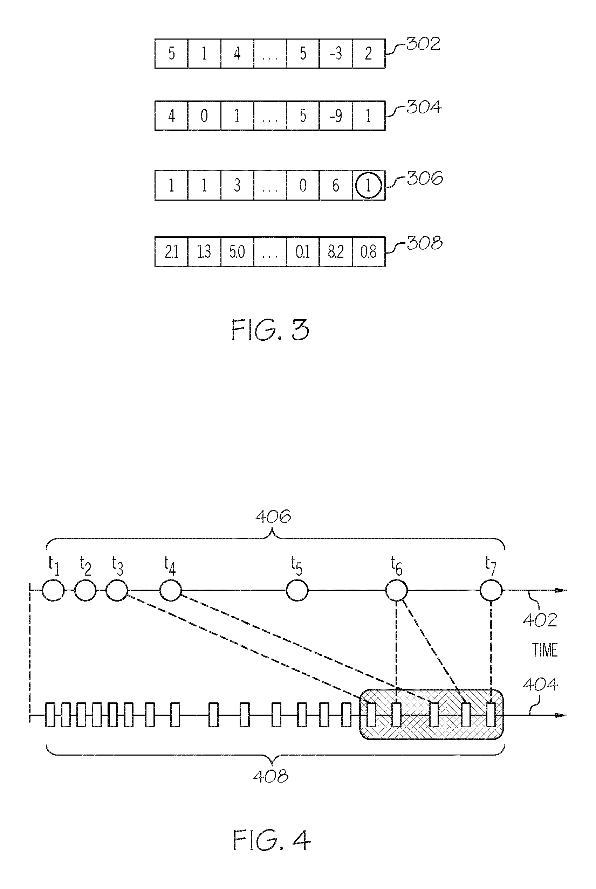

To provide a relatively simple illustration of just one exemplary embodiment for implementing the distance calculation, reference should now be made to FIG. 3, which depicts four different vectors. The first vector 302 represents a previously created cluster, and the second vector 304 represents the current feature vector. The third vector 306 represents the calculated distances associated with each feature. In particular, the differences between each feature in the first and second vectors 302, 304. The fourth vector 308 represents the current threshold. It may thus be seen that the non-circled numbers in the third vector 306 represent features that are less than its associated threshold, whereas the circled number represents a feature that is greater than its associated threshold. Thus, the current feature vector 304 will not be assigned to the previously created cluster 302. Preferably, for reasons which will now be discussed, the processing and control function 122 stores data in memory 124 that includes information representative of the feature vector that created each cluster and the time that each cluster was created (212). As noted above, this is merely one exemplary method for implementing the distance calculation and that numerous other methods could be used depending upon the type of extracted features.

Returning once again to FIG. 3, it was previously noted that if the current feature vector cannot be assigned to any previously created cluster, then a new cluster is created (212). Thereafter, the individual feature thresholds are recalculated (214). The feature threshold recalculation is based on the variance between all of the observed clusters. In one particular embodiment, this is defined as 1.5 standard deviations for each particular feature.

After the current feature vector is assigned to a cluster, a stability measure (T) is calculated (216). The stability measure is representative of the rate at which a defect in the structure 108 may be growing, and is based on the cluster to which the current feature vector is assigned and the clusters to which a predetermined number of previous feature vectors (h) are assigned. A simplified representation of how the stability measure (T) is calculated will now be described with reference to FIG. 4.

Two time axes are depicted in FIG. 4, a first time axis 402 and a second time axis 404. The first time axis 402 represents when the particular clusters 406 were created, and the second time axis 404 represents when the sensor signals were sampled and associated feature vectors were generated 408. In this illustrative example, the predetermined number of previous feature vectors is, for ease of description, set to 5 (i.e., h=5). Each of these last 5 feature vectors is assigned to a particular cluster and, as was noted above, data that includes information representative of the feature vector that created each cluster and the time that each cluster was created is stored in memory 124. This is because the time of creation of the clusters is used to calculate the stability measure.

More specifically, although the stability measure may be calculated using any one of numerous techniques, in the depicted embodiment it is calculated, as shown below, by computing an average cluster creation time ($t_i$) for the predetermined number of feature vectors (h), and dividing the average cluster creation time by current time (t):

$$T = \frac{\frac{\sum_{i=1}^{h} t_i}{h}}{t}.$$

So, for the example depicted in FIG. 4, the stability measure is:

$$T = \frac{\frac{t_3 + t_6 + t_4 + t_6 + t_7}{5}}{t_7}.$$

Returning once again to FIG. 2, after the stability measure is calculated, it is compared to a predetermined threshold ($T_{thresh}$) (218). If the calculated stability measure is less than the predetermined threshold, then the process repeats. Alternatively, if the calculated stability measure is greater than (or equal to) the predetermined threshold, then an alarm signal is generated and supplied to the output device 106 (222). It will be appreciated that the predetermined threshold may vary. In one particular embodiment, in which the stability measure is always between 0 and 1, the predetermined threshold is 0.9.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A method of detecting damage growth in a structure, comprising the steps of:

    sensing, with a sensor that is coupled to the structure, a physical quantity reflecting damage growth, to thereby generate and supply a sensor signal;
    extracting a plurality of features from the sensor signal to thereby generate a current feature vector;
    assigning the current feature vector to either a previously created cluster or to a new cluster;
    calculating a stability measure based on clusters to which the current feature vector and a predetermined number of previous feature vectors are assigned; and
    selectively generating an alarm based on the calculated stability measure.

2. The method of claim 1, wherein the step of selectively assigning comprises:

    computing a distance between the current feature vector and previously created clusters;
    assigning the current feature vector to a previously created cluster when the distance is less than or equal to a predetermined threshold; and assigning the current feature vector to the new cluster when the distance is greater than a predetermined threshold.

3. The method of claim 1, further comprising calculating the predetermined threshold based on a variance of all observed clusters.

4. The method of claim 1, wherein the step of calculating the stability measure comprises:

    computing an average cluster creation time; and dividing the average cluster creation time by current time.

5. The method of claim 1, wherein the stability measure is calculated according to:

$$T = \frac{\frac{\sum_{i=1}^{h} t_i}{h}}{t},$$

wherein:

    T is the stability measure,
    h is a predetermined number of feature vectors, and
    t is time.

6. The method of claim 1, further comprising:

    transmitting ultrasonic waves into the structure; sensing, with the sensor, the transmitted ultrasonic waves, to thereby generate and supply the sensor signal;

7. The method of claim 6, wherein the ultrasonic waves are ultrasonic guided waves.

8. A structural health monitoring system for detecting damage growth in a structure, comprising:

    a transducer configured to transmit ultrasonic waves into the structure, and to sense the transmitted ultrasonic waves to thereby generate and supply a sensor signal; and
    a processor in operable communication with the transducer and coupled to receive the sensor signal therefrom, the processor configured, upon receipt of the sensor signal to:

        extract a plurality of features from the sensor signal to thereby generate a current feature vector,
        assign the current feature vector to either a previously created cluster or to a new cluster,
calculate a stability measure based on clusters to which the current feature vector and a predetermined number of previous feature vectors are assigne, and
selectively generate an alarm signal based on the calculated stability measure.

9. The system of claim 8, wherein the processor is further configured to:

compute a distance between the current feature vector and previously created clusters;
assign the current feature vector to a previously created cluster when the distance is less than or equal to a predetermined threshold; and assign the current feature vector to the new cluster when the distance is greater than a predetermined threshold.

10. The system of claim 8, wherein the processor is further configured to calculate the predetermined threshold based on a variance of all observed clusters.

11. The system of claim 8, wherein the processor is further configured to:

compute an average cluster creation time; and divide the average cluster creation time by current time.

12. The system of claim 8, wherein the processor calculates the stability measure according to:

$$T = \frac{\frac{\sum_{i=1}^{h} t_i}{h}}{t},$$

wherein:

T is the stability measure,
h is a predetermined number of feature vectors, and
t is time.

13. The system of claim 8, wherein the ultrasonic waves are ultrasonic guided waves.

FIG. 1

FIG. 2

| 5 | 1 | 4 | . . . | 5 | -3 | 2 | ⌐302 |

| 4 | 0 | 1 | . . . | 5 | -9 | 1 | ⌐304 |

| 1 | 1 | 3 | . . . | 0 | 6 | ① | ⌐306 |

| 2.1 | 1.3 | 5.0 | . . . | 0.1 | 8.2 | 0.8 | ⌐308 |

FIG. 3

FIG. 4

Europäisches
Patentamt

European
Patent Office

Office européen
des brevets

# EUROPEAN SEARCH REPORT

Application Number

EP 15 16 2868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIMITAR P FILEV ET AL: "An Industrial Strength Novelty Detection Framework for Autonomous Equipment Monitoring and Diagnostics", IEEE TRANSACTIONS ON INDUSTRIAL INFORMATICS, IEEE SERVICE CENTER, NEW YORK, NY, US, vol. 6, no. 4, 1 November 2010 (2010-11-01), pages 767-779, XP011316936, ISSN: 1551-3203 | 1-5 | INV. G01N29/44 |
| Y | * abstract * <br> * page 768 - page 774 * <br> ----- | 6-13 | |
| X | US 2014/039834 A1 (SHIBUYA HISAE [JP] ET AL) 6 February 2014 (2014-02-06) | 1-5 | |
| Y | * abstract * <br> * column 2 - column 3 * <br> * column 39 * <br> * paragraph [0049] - paragraph [0050] * <br> * paragraph [0059] * <br> ----- | 6-13 | |
| X | US 2007/088550 A1 (FILEV DIMITAR [US] ET AL) 19 April 2007 (2007-04-19) | 1-5 | |
| Y | * abstract * <br> * paragraph [0008] * <br> * paragraph [0030] - paragraph [0059] * <br> * paragraph [0067] * <br> ----- <br><br> -/-- | 6-13 | |

TECHNICAL FIELDS
SEARCHED     (IPC)

G01N

The present search report has been drawn up for all claims

| Place of search | Date of completion of the search | Examiner |
|---|---|---|
| Munich | 11 September 2015 | Rouault, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 15 16 2868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ABDULLA AL-SALAH ET AL: "Two-level fuzzy inference system for aircraft's structural health monitoring", SOUTHEASTCON, 2013 PROCEEDINGS OF IEEE, IEEE, 4 April 2013 (2013-04-04), pages 1-6, XP032440512, DOI: 10.1109/SECON.2013.6567360 ISBN: 978-1-4799-0052-7 * abstract * * page 3, left-hand column * ----- | 6-13 | |

TECHNICAL FIELDS
SEARCHED (IPC)

The present search report has been drawn up for all claims

| Place of search | Date of completion of the search | Examiner |
|---|---|---|
| Munich | 11 September 2015 | Rouault, Patrick |

## ANNEX TO THE EUROPEAN SEARCH REPORT
## ON EUROPEAN PATENT APPLICATION NO.

EP 15 16 2868

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2015

| Patent document cited in search report | Publication date | Patent family member(s) | Publication date |
|---|---|---|---|
| US 2014039834 A1 | 06-02-2014 | JP 5301717 B1<br>JP 2014032455 A<br>US 2014039834 A1 | 25-09-2013<br>20-02-2014<br>06-02-2014 |
| US 2007088550 A1 | 19-04-2007 | DE 102006048430 A1<br>US 2007088550 A1 | 10-05-2007<br>19-04-2007 |

EPO FORM P0459

For more details about this annex : see Official Journal of the European Patent Office, No. 12/82